# EUROPÄISCHE PATENTSCHRIFT

(11) **EP 2 150 691 B1**
(45) Veröffentlichungstag und Bekanntmachung des Hinweises auf die Patenterteilung: **06.04.2011**
(21) Anmeldenummer: 08759837.1
(22) Anmeldetag: 21.05.2008
(51) Int. Cl.: F01N 3/20, B01J 19/26

(54) **VERFAHREN UND VORRICHTUNG ZUM VERDAMPFEN EINES FLUIDES**
METHOD AND DEVICE FOR EVAPORATING A FLUID
PROCÉDÉ ET DISPOSITIF UTILISÉS POUR ÉVAPORER UN FLUIDE

(30) Priorität: 22.05.2007 DE 102007024081
(43) Veröffentlichungstag der Anmeldung: 10.02.2010
(73) Patentinhaber: Emitec Gesellschaft für Emissionstechnologie mbH, 53797 Lohmar (DE)
(72) Erfinder: HIRTH, Peter, 51503 Rösrath (DE); BRÜCK, Rolf, 51429 Bergisch Gladbach (DE)
(74) Vertreter: Rössler, Matthias
(86) Internationale Anmeldenummer: PCT/EP2008/056233
(87) Internationale Veröffentlichungsnummer: WO 2008/142095

(56) Entgegenhaltungen:
- WO-A-2006/014129
- DE-A1-102005 011 657
- US-A1- 2004 098 979
- US-A1- 2006 275 192

## Beschreibung

Gegenstand der vorliegenden Erfindung ist ein Verfahren und eine Vorrichtung zum Verdampfen eines Fluides. Insbesondere handelt es sich hierbei um Harnstoff-Wasser-Lösung, die als Reduktionsmittelvorläufer des Reduktionsmittels Ammoniak bei der selektiven katalytischen Reduktion von Stickoxiden im Abgassystem von Verbrennungskraftmaschinen eingesetzt wird.

Beim Einsatz der selektiven katalytischen Reduktion (SCR, Selective Catalytic Reduction) zur Reduktion des Stickoxidgehalts im Abgas von Verbrennungskraftmaschinen, insbesondere in Automobilen, wird oftmals Ammoniak als selektiv auf Stickoxide wirkendes Reduktionsmittel eingesetzt. Insbesondere bei mobilen Anwendungen wird Ammoniak aus Harnstoff durch Thermolyse und/oder Hydrolyse erzeugt. Harnstoff wird oft in Form von Harnstoff-Wasser-LÖsung bevorratet und dann bei Bedarf entweder in Form der Lösung in das Abgassystem eingedüst oder Abgas extern verdampft und dann als ammoniak- bzw. harnstoffhaltiger Dampf dem Abgas zugeführt. Im letzteren Fall stellt oft gerade die Verdampfung größerer Volumina in dynamischen Lastfällen ein Problem dar, da die Aufbringung der Verdampfungsenthalpie dem Verdampfer relativ viel Energie entzieht, so dass dieser abfühlt, wobei die Abkühlung gegebenenfalls so gravierend ist, dass keine vollständige Verdampfung des Fluides mehr erfolgt.

Die US 2004/098979 A1 beschreibt eine Vorrichtung und ein Verfahren zur Reduzierung von Stickoxiden und Partikeln in einem Abgassystem. Dabei wird ein Reduktionsmittel verdampft und der Abgasleitung zugeführt. Insbesondere wird ein Heizelement vorgeschlagen, dass von einem Zuführrohr umschlossen, dessen Innendurchmesser groß genug ist, um das Heizelement aufzunehmen. Das Zuführrohr weist einen engen, in dasselbe gebohrten Kanal auf, der als Durchlass für die Luft- und Reduktantmischung dient. Die Luft- und Reduktanimischung wird in den engen Kanal eingespritzt und durch die gelieferte Hitze verdampft, ohne in direkten Kontakt mit seiner Oberfläche zu kommen. Das Zuführrohr weist an seinem Ende eine oder mehrere Öffnungen auf, durch die die verdampfte Reduktant- und Luftmischung austritt.

Die WO 2006/014129 A1 ist auf eine Vorrichtung zur Verdampfung eines Reduktionsmittels gerichtet. Dabei wird ein rohrförmiges Element in einer Abgasleitung positioniert, wobei in das rohrförmig Element das Reduktionsmittel eingebracht und dort verdampft wird.

Von daher liegt der hier vorliegenden Erfindung die Aufgabe zugrunde, die aus dem Stand der Technik bekannten Nachteile zumindest teilweise zu überwinden und insbesondere ein Verfahren und eine Vorrichtung zum Verdampfen eines Fluides bereitzustellen, bei dem auch größere Volumina des Fluides vollständig verdampft werden können.

Diese Aufgaben werden gelöst durch ein Verfahren und eine Vorrichtung mit den Merkmalen der abhängigen Ansprüche. Abhängige Ansprüche sind auf vorteilhafte Weiterbildungen gerichtet.

Das erfindungsgemäße Verfahren zum Verdampfen eines vorgebbaren Volumens eines Fluides umfasst die folgenden Schritte:
a) sukzessives Zugeben mindestens eines ersten Teilvolumens mit einer ersten Volumenzugaberate und mindestens eines vom ersten Teilvolumen unterschiedlichen zweiten Teilvolumens des vorgebbaren Volumens mit einer zweiten Volumenzugaberate in eine Zuleitung;
b) zumindest teilweises Verdampfen der Teilvolumina, so dass sich ein Dampffilm zwischen dem jeweiligen Teilvolumen und einer Wand der Zuleitung bildet;
c) Führen der Teilvolumina durch die Zuleitung zu einer Verdampferfläche; und
d) Aufgeben der Teilvolumina auf einen Bereich der Verdampferfläche, dessen Lage in Abhängigkeit mindestens eines der folgenden Parameter variiert wird:
   i) der Masse des entsprechenden Teilvolumens und
   ii) der Volumenzugaberate des entsprechenden Teilvolumens.

Schritt a) umfasst also insbesondere eine Aufteilung des vorgebbaren Volumens in mehrere unterschiedlich große Teilvolumina. Dieses kann durch ein entsprechendes Steuermittel vorgenommen werden, so dass vor Zugabe mehrere Teilvolumina des vorgebbaren Volumens berechnet und diese dann beispielsweise durch eine entsprechend ausgebildete Dosierpumpe in die Zuleitung zugegeben werden. Schritt a) umfasst auch den Fall, dass kontinuierlich das Fluid in die Zuleitung gefördert wird, wobei der Volumenstrom zeitlich variabel ist, so dass von daher erste und zweite Teilvolumina sukzessive in die Zuleitung zugegeben werden. In diesem Falle wird die Volumenzugaberate zeitlich variiert, beispielsweise über eine entsprechende Variation der Förderleistung einer Pumpe und/oder über entpsrechende Drosseln wie beispielsweise Ventile, mit denen die Volumenzugaberate zur zeitlich gesteuertes Öffnen oder Schließen variiert werden kann. Die Amplitude der Volumenzugaberate kann kontinuierlich und/oder diskontinuierlich variiert werden. Die Amplitude der Volumenzugaberate kann über vorgebbare Zeitintervalle konstant bleiben, die Lände dieser Zeitintervalle ist bevorzugt variabel.

Durch Schritt d) werden unterschiedliche Bereiche der Verdampferfläohe mit den unterschiedlich großen Teilvolumina massen- und/oder Volumenzugaberatenabhängig beaufschlagt. Dies führt zu einer gleichmäßigeren Ausnutzung der Verdampferfläche und damit zu einem gleichmäßigeren und nicht nur punktuellen Abkühlen der Verdampferfläche. Dies bewirkt, dass eine deutlich vollständigere Verdampfung als bei anderen Systemen aus dem Stand der Technik erfolgt, da das Risiko, dass sich die Verdampferfläche so stark abkühlt, dass eine weitere Verdampfung nicht möglich ist, deutlich reduziert wird.

Besonders bevorzugt stellt das Fluid Harnstoff-Wasser-Lösung dar. Besonders bevorzugt ist hierbei ein Einsatz bzw. eine Verwendung des Verfahrens zum Zufuhren eines Harnstoff- und/oder Ammoniakhaltigen Gasstroms zum Abgassystem einer Verbrennungskraftmaschine, insbesondere bei mobilen Anwendungen wie beispielsweise bei Automobilen und/oder Motorrädern.

Bei dem erfindungsgemäßen Verfahren umfasst die Verdampferfläche die Oberfläche mindestens eines Verdampferkanals. Bevorzugt stellen Zuleitung und Verdampferkanal einen gemeinsamen Kanal dar.

Weiterhin-bevorzugt ist, dass Schritt d) auf Trägheitseffekten beruht. So kann aufgrund der unterschiedlichen Massen der einzelnen Teilvolumina unter Ausnutzung von Trägheitseffekten eine möglichst gleichmäßige Verteilung der Teilvolumina auf der Verdampferfläche erreicht werden. Dies kann insbesondere dadurch erfolgen, dass der Verdampferkanal gekrümmt ist, seinen Krümmungsradius ändert und/oder dass der Verdampferkanal seinen durchströmbaren Querschnitt ändert.

Gemäß einer vorteilhaften Ausgestaltung des erfindungsgemäßen Verfahrens umfasst das Fluid Harnstoff in wässriger Lösung, gegebenenfalls mit weiteren Zusatzstoffen, beispielsweise von Ameisensäure. Solche wässrigen Lösungen von Harnstoff sind unter dem Markennamen "Ad Blue" oder "Denoxium" erhältlich.

Gemäß einem weiteren Aspekt der vorliegenden Erfindung wird eine Vorrichtung zum Verdampfen eines Fluides vorgeschlagen, welche das erfindungsgemäße Verfahren durchführt. Bei der erfindungsgemäßen Vorrichtung ist durch eine Zuleitung das Fluid zu einer Verdampferfläche zuführbar, wobei die Verdampferfläche die Oberfläche eines Verdampferkanals umfasst, wobei mindestens einer der folgenden Parameter variabel ist:
a) ein Krümmungsradius des Verdampferkanals;
b) ein durchströmbarer Querschnitt des Verdampferkanals;
c) die Volumenzugaberate des Fluides.

Durch Variation des Krümmungsradius, der Krümmung und/oder des durchströmbaren Querschnitts kann erreicht werden, dass aufgrund von Trägheitseffekten unterschiedlich große Teilvolumina des vorgebbaren Volumens an unterschiedlichen Stellen der Verdampferfläche auftreffen. So werden unterschiedliche Bereiche der Verdampferfläche zur Aufbringung der Verdampfungsenthalpie und zur weiteren Erhitzung des Dampfes herangezogen. Dies verhindert ein punktuelles Auskühlen der Verdampferfläche beim Verdampfen größerer vorgebbarer Volumina. Die Variabilität der Volumenzugaberate des Fluides wird durch entsprechend ansteuerbare Fördermittel wie beispielsweise Pumpen und/oder Ventile erreicht.

Gemäß einer vorteilhaften Ausgestaltung der erfindungsgemäßen Vorrichtung ist zumindest ein Teil der Verdampferkanal mit einer porösen Beschichtung versehen, die insbesondere die Hydrolyse eines Reduktionsmittelvorläufers zu Reduktionsmittel katalysiert. Besonders bevorzugt ist die Zuleitung und der Verdampferkanal aus einem Werkstoff ausgebildet, der korrosionsbeständig bei der Zugabe und Verdampfung einer Harnstoff-Wasser-Lösung ist. Insbesondere kann der Werkstoff einen entsprechenden Edelstahl, Titan und/oder Aluminium umfassen.

Die erfindungsgemäße Vorrichtung umfasst bevorzugt ein Fördermittel umfassend mindestens eine Pumpe zur Förderung des Fluides aus einem Reservoir in die Zuleitung. Bevorzugt ist die Ausgestaltung der Pumpe als Dosierpumpe, deren Förderleistung und damit die Volumenzugaberate des Fluides regelbar ist. Alternativ oder zusätzlich kann eine Förderpumpe als Fördermittel ausgebildet sein, mittels der eine Förderleistung und/oder eines Förderdrucks des Fluides vorgegeben werden kann. Durch Variation der Förderleistung und/oder des Förderdrucks und Ansteuerung eines entsprechenden zwischen Reservoir und Zuleitung ausgebildeten Ventils kann die Volumenzugaberate des Fluides variiert werden.

Im Folgenden soll die Erfindung anhand der beigefügten Figuren näher erläutert werden, ohne dass die Erfindung auf das dort gezeigte Ausführungsbeispiel beschränkt wäre. Die für das erfindungsgemäße Verfahren offenbarten Details und Vorteile lassen sich auf die erfindungsgemäße Vorrichtung übertragen und anwenden und umgekehrt. Es zeigen schematisch:
- Fig. 1:: ein Ausführungsbeispiel einer erfindungsgemäßen Vorrichtung mit Erläuterungen des sich ändernden durchströmbaren Querschnitts;
- Fig. 2:: ein Ausführungsbeispiel einer erfindungsgemäßen Vorrichtung mit Erläuterungen zum Krümmungsradius;
- Fig. 3:: ein Ausführungsbeispiel einer erfindungsgemäßen Vorrichtung mit einer porösen Beschichtung auf einer Verdampferfläche;
- Fig. 4:: ein zweites Ausführungsbeispiel einer erfindungsgemäßen Vorrich- tung; und
- Fig. 5 bis 7:: Beispiele für Variationen der Volumenzugaberate des Fluids.

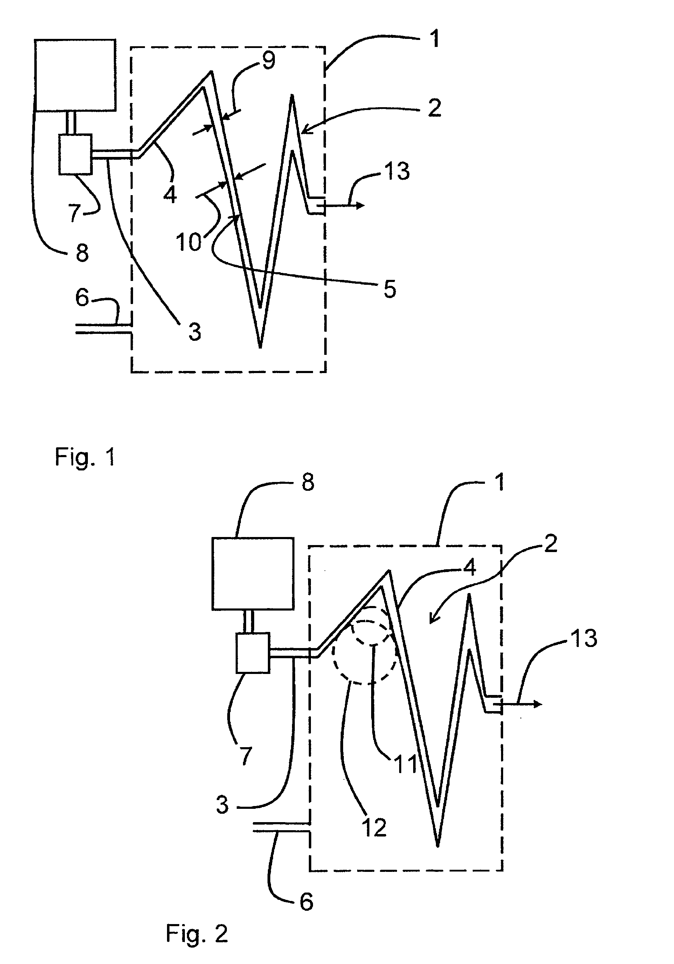

Fig. 1 zeigt ein erstes Ausführungsbeispiel einer erfindungsgemäßen Vorrichtung 1 zum Verdampfen eines Fluides. Die Vorrichtung 1 weist einen Kanal 2 auf, der sich in eine Zuleitung 3 und einen Verdampferkanal 4 teilen lässt. Die Zuleitung 3 dient dabei dem Zuführen des Fluides, während der Verdampferkanal 4 als Verdampferflächen 5 dienende Wände aufweist. Hierbei weist die Vorrichtung 1 einen Vollkörper aus Aluminium auf, in dem der Kanal 2 eingebracht ist, beispielsweise durch Fräsen. Die Vorrichtung 1 weist weiterhin nicht gezeigte elektrische Heizmittel auf, die über die Anschlüsse 6 mit elektrischem Strom versorgt werden können. Hierdurch ist die Vorrichtung 1 elektrisch beheizbar.

Über eine Dosierpumpe 7 ist das entsprechende Fluid aus einem Reservoir 8 in die Zuleitung 3 förderbar. Die Förderleistung der Dosierpumpe 7 und damit die Volumenzugaberate des Fluides in die Zuteilung 3 ist variabel. Erfindungsgemäß soll dabei ein vorgebbares Volumen des Fluides, hier Hamstoff-Wasser-Lösung zur Bereitstellung von Ammoniak als Reduktionsmittel im Abgas von Verbrennungskraftmaschinen, verdampft werden. Erfindungsgemäß wird hierbei das vorgebbare Volumen, dessen Menge sich beispielsweise aus der im Abgas vorhandenen Stickoxid-Konzentration berechnet, in einzelne, unterschiedlich große Teilvolumina geteilt. So ist es beispielsweise möglich, dass ein erstes Teilvolumen gebildet wird, weiches einem Drittel des vorgebbaren Volumens entspricht und ein zweites Teilvolumen, welches zwei Dritteln des vorgebbaren Volumens entspricht. Andere Teilungen sind möglich, beispielsweise in ein erstes Teilvolumen mit einem Sechstel des vorgebbaren Volumens, einem zweiten Teilvolumen mit zwei Sechsteln des vorgebbaren Volumens und einem dritten Teilvolumen entsprechend der Hälfte des vorgebbaren Volumens. Hierbei kann die Dosierpumpe 7 in vorteilhafter Weise zur Förderung der Teilvolumina in die Zuleitung 2 und dann in die Verdampferkanal 4 genutzt werden. Alternativ kann die Volumenzugaberate des Fluids durch entsprechende Ansteuerung der Dosierpumpe 7 so variiert werden, dass das vorgebbare Volumen verdampft wird. Hier kann in vorteilhafter Weise auch die Laufzeit des Abgases von der Verbrennungskraftmaschine bis zur Umsetzung mit Ammoniak genutzt werden und die Dosierpumpe 7 entsprechend gesteuert werden.

In der Verdampferkanal 4 oder der Zuleitung 3 erfolgt eine teilweise Verdampfung der entsprechenden Teilvolumina, so dass sich ein Dampffilm zwischen dem Teilvolumen und einer Wand der Zuleitung 3 bildet. Dies beruht insbesondere auf dem sogenannten Leidenfrost-Effekt, hierbei werden die Wände der Zuleitung 3 so beheizt, dass dieser Leidenfrosteffekt gezielt auftritt. Hierdurch entsteht ein Dampffilm zwischen dem Teilvolumen und der Wand der Zuleitung 3. Aufgrund des durch die Dosierpumpe 7 aufrechterhaltenden Druckgefälles wird dieses Teilvolumen durch die Zuleitung 3 und die Verdampferkanal 4 geführt. Hierbei erfolgt die Führung der einzelnen Teilvolumina hin zu einer Verdampferfläche 5. Diese Verdampferfläche 5 ist im Ausführungsbeispiel eine Wand des Verdampferkanal 4. Durch eine Änderung der Krümmung und/oder des durchströmbaren Querschnitts der Verdampferkanal 4 wird erreicht, dass ein Auftreffen der Teilvolumina auf die Verdampferfläche 5 in Abhängigkeit von der Masse der einzelnen Teilvolumina erfolgt. Dadurch dass unterschiedliche Teilvolumina zugegeben werden, wird erreicht, dass nicht nur ein Teilbereich der Verdampferfläche 5 zur Verdampfung des Fluides genutzt wird, sondern dass vielmehr eine Streuung der verwendeten Verdampferflächen 5 erreicht wird. Eine weitere Streuung wird alternativ oder zusätzlich durch die Variation der Volumenzugaberate des Fluids erreicht. Die Streuung der verwendeten Verdampferflächen 5 führt in vorteilhafter Weise dazu, dass die Verdampferfläche 5 effektiv genutzt wird und insbesondere beim Verdampfen von größeren vorgebbaren Volumina des Fluides eine gleichmäßige Ausnutzung der Verdampferfläche 5 stattfindet. Dies führt zu einem deutlich verbesserten Verdampfungsergebnis, da bei einer quasi punktweisen Ausnutzung der Verdampferfläche 5 und größeren vorgebbaren Volumina der Wärmeverlust innerhalb der Vorrichtung 1 so groß ist, dass eine vollständige Verdampfung des vorgebbaren Volumens nicht gewährleistet werden kann. Weiterhin kann die Temperatur der Zuleitung 3 und/oder des Verdampferkanals 4 entsprechend geregelt werden, um eine möglichst vollständige Verdampfung des Fluids zu erreichen.

Somit verhindert die erfindungsgemäße Verfahrensführung in vorteilhafter Weise eine unvollständige Verdampfung, bei der Tropfen des Fluides unverdampft aus der Verdampferkanal 4 austreten. Das Aufgeben der einzelnen Teilvolumina auf einen Bereich der Verdampferfläche 5, dessen Lage in Abhängigkeit der Masse und/oder der Volumenzugaberate des Fluids des entsprechenden Teilvolumens variiert wird, kann durch mehrere Maßnahmen erreicht werden. Beispielsweise kann hier eine Variation der Krümmung und/oder des durchströmbaren Querschnitts der Verdampferkanal 4 erfolgen. Allgemein werden hier Trägheitseffekte genutzt, die aufgrund der unterschiedlichen Masse der verschiedenen Teilvolumina zu unterschiedlichem Auftreffbereichen auf der Verdampferfläche 5 führen.
Fig. 1 zeigt hierbei einen ersten durchströmbaren Querschnitt 9 und einen zweiten durchströmbaren Querschnitt 10 der Verdampferkanal 4. Der erste durchströmbare Querschnitt 10 ist größer als der zweite durchströmbare Querschnitt 10. Ein Dampfstrom 13 des verdampften Fluides verlässt die Vorrichtung 1.
Fig. 2 zeigt, dass sich die Krümmung des Verdampferkanals 4 ändert. Hierzu sind ein erster Krümmungskreis 11 und ein zweiter Krümmungskreis 12 eingezeichnet. Wie ersichtlich, ändert sich hierbei der Krümmungsradius, was zu einer massenabhängigen Abscheidung der Teilvolumina auf der Verdampferfläche 5 und damit zu einer örtlich aufgelösten Verdampfung der einzelnen Teilvolumina führt.

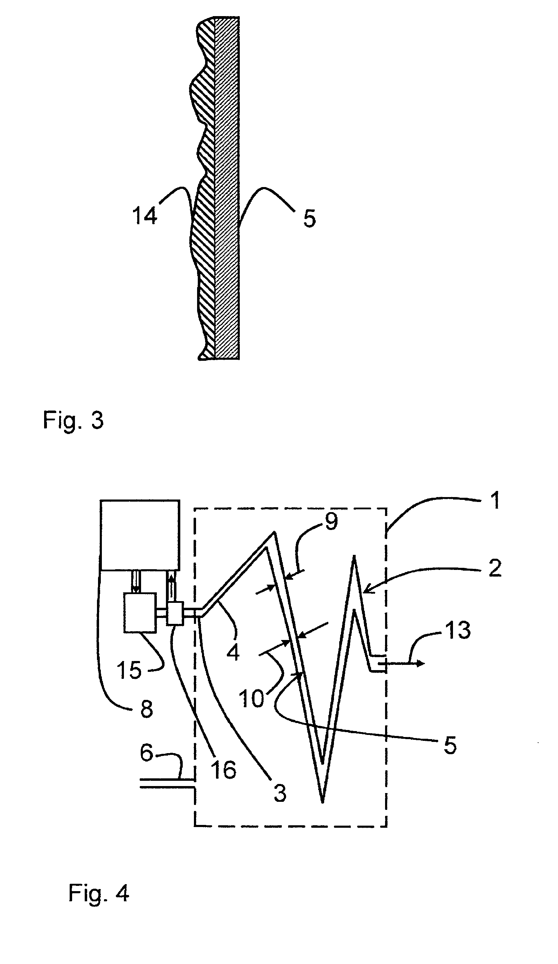

Fig. 3 zeigt ein Ausschnitt eines Auaführungsbeispiels, bei dem die Verdampferfläche 5 eine poröse Beschichtung 14 aufweist, die die Hydrolyse von Harnstoff zu Ammoniak katalysiert.
Fig. 4 zeigt ein alternatives Ausführungspeispiel einer erfindungsgemäßen Vorrichtung 1. Statt einer Dosierpumpe 7 ist im vorliegenden Ausführungsbeispiel eine Förderpumpe 15 ausgebildet, mittels der die Hamstoff-Wasser-Lösung aus dem Reservoir 8 gefördert wird. Über ein regelbares 2/3-Wege-Ventil 16 wird die Zugabe der Harnstoff-Wasser-Lösung zur Zuleitung 3 geregelt. Über dieses Ventil 16 kann die Hamstoff-Wasser-Lösung entweder in die Zuleitung 3 oder zurück in das Reservoir 8 geführt werden. Durch die Dauer der Öffnung des Ventils 16 hin zur Zuleitung 3, sowie die durch das Ventil 16 in die Zuleitung 3 Menge, die durch die Regelung der Fördermenge der Förderpumpe 15 geregelt werden kann, kann die Volumenzugaberate des Fluids in die Zuleitung 3 variiiert werden.

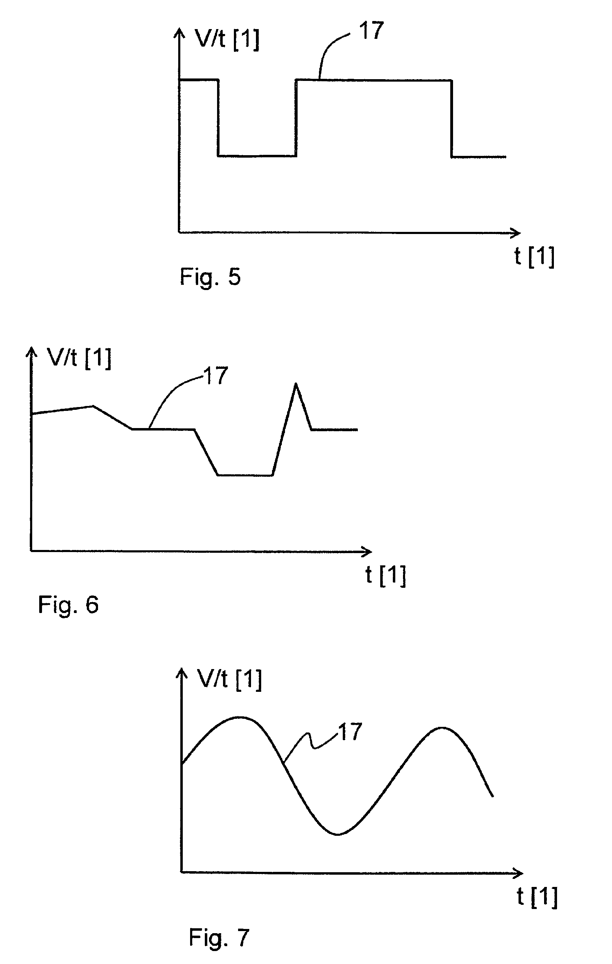

Fig. 5 zeigt ein erstes Beispiel eines Verlaufes der Volumenzugaberate 17 in die Zuleitung 3 über die Zeit. Dieses Beispiel kann durch die entsprechende Ausbildung einer Förderpumpe 15 und eines Ventils 16 erreicht werden, wobei das Ventil 16 unterschiedliche frei durchströmbare Querschnitte aufweisen kannIn diesem Fall ist also die durch das Ventil 16 in die Zuleitung 3 tretende Fluidmenge pro Zeiteinheit regelbar. Durch Variation der Zeitintervalle, in denen das Ventil 16 zur Zuleitung 3 geöffnet oder geschlossen ist und durch Variation der durch das Ventil 16 strömenden Menge an Fluid kann die Volumenzugaberate 17 gesteuert werden. Durch entsprechende Ansteuerung der Dosierpumpe 7 und/oder der Förderpumpe 15, sowie des Ventils 16 kann eine entsprechende Variation der Volumenzugaberate 17 gemäß den Figuren 6 und 7 erfolgen. In den Figuren 5 bis 7 sind sowohl die Zeit t, als auch die Volumenzugaberate V/t in willkürlichen Einheiten angegeben.

Das erfindungsgemäße Verfahren und die erfindungsgemäße Vorrichtung 1 erlauben in vorteilhafter Weise eine möglichst effektive Verdampfung eines Fluides insbesondere von Hamstoff-Wasser-Lösung. Durch die massen- und/oder Volumenzugaberatenabhängige Verteilung der Auftreffflächen auf der Verdampferfläche 5 wird erreicht, dass ein möglichst großer Anteil der Verdampferfläche 5 benutzt wird. Hierzu wird in vorteilhafter Weise im Bereich der Zuleitung 3 eine Heizstrategie betrieben, die gewährleistet, dass bei Zugabe der einzelnen Teilvolumina jeweils der Leidenfrost-Effekt eintritt. Hierdurch kann eine möglichst gleichmäßige Verteilung durch eine entsprechende Ausgestaltung der Geometrie der Verdampferkanal 4 erreicht werden.

### Bezugszeichenliste

- 1: Vorrichtung zum Verdampfen eines Fluides
- 2: Kanal
- 3: Zuleitung
- 4: Leitung
- 5: Verdampferfläche
- 6: Abschlüsse
- 7: Dosierpumpe
- 8: Reservoir
- 9: erster durchströmbarer Querschnitt
- 10: zweiter durchströmbarer Querschnitt
- 11: erster Krümmungskreis
- 12: zweiter Krümmungskreis
- 13: Dampfstrom
- 14: poröse Beschichtung
- 15: Förderpumpe
- 16: regelbares Ventil
- 17: Volumenzugaberate

## Patentansprüche

1. Verfahren zum Verdampfen eines vorgebbaren Volumens eines Fluides, umfassend die folgenden Schritte:
a) sukzessives Zugeben mindestens eines ersten Teilvolumens mit einer ersten Volumenzugaberate (17) und mindestens eines vom ersten Teilvolumen unterschiedlichen zweiten Teilvolumens des vorgebbaren Volumens mit einer zweiten Volumenzugaberate (17) in eine Zuleitung (3);
b) zumindest teilweises Verdampfen der Teilvolumina, so dass sich ein Dampffilm zwischen dem Teilvolumen und einer Wand der Zuleitung (3) bildet;
c) Führen der Teilvolumina durch die Zuleitung (3) zu einer Verdampferfläche (5), wobei die Verdampferfläche (5) die Oberfläche mindestens eines Verdampferkanals (4) umfasst; und
d) Aufgeben der Teilvolumina auf einen Bereich der Verdampferfläche (5), dessen Lage in Abhängigkeit mindestens eines der folgenden Parameter variiert wird:
i) der Masse des entsprechenden Teilvolumens und
ii) der Volumenzugaberate (17) des entsprechenden Teilvolumens.

2. Verfahren nach Anspruch 1, bei dem Schritt d) auf Trägheitseffekten beruht.

3. Verfahren nach einem der Ansprüche 1 oder 2, bei der der Verdampferkanal (4) gekrümmt ist und seinen Krümmungsradius ändert.

4. Verfahren nach einem der vorhergehenden Ansprüche, bei dem der Verdampferkanal (4) seinen durchströmbaren Querschnitt (9, 10) ändert.

5. Verfahren nach einem der vorhergehenden Ansprüche, bei dem das Fluid Harnstoff in wässriger Lösung umfasst.

6. Vorrichtung (1) zum Verdampfen eines Fluides nach einem Verfahren nach einem der vorhergehenden Ansprüche, bei der durch eine Zuleitung (3) das Fluid zu einer Verdampferfläche (5) zuführbar ist, wobei die Verdampferfläche die Oberfläche eines Verdampferkanals (4) umfasst, wobei mindestens einer der folgenden Parameter variabel ist:
a) ein Krümmungsradius des Verdampferkanals (4);
b) ein durchströmbarer Querschnitt (9, 10) des Verdampferkanals (4); und
c) die Volumenzugaberate (17) des Fluids.

7. Vorrichtung (1) nach Anspruch 6, bei der zumindest ein Teil des Verdampferkanals (4) eine poröse Beschichtung (14) umfasst.

8. Vorrichtung (1) nach Anspruch 6 oder 7, bei der zumindest ein Teil des Verdampferkanals (4) eine die Hydrolyse eines Reduktionsmittelvorläufers zu Reduktionsmittel katalysierende Beschichtung umfasst.

9. Vorrichtung (1) nach einem der Ansprüche 6 bis 8, bei der Zuleitung (3) und Verdampferkanal (4) aus einem Werkstoff ausgebildet ist, der korrosionsbeständig bei der Zugabe und Verdampfung einer Hamstoff-Wasser-Lösung ist.

10. Vorrichtung (1) nach Anspruch 9, bei der die Zuleitung (3) und der Verdampferkanal (4) aus einem Werkstoff umfassend mindestens eines der folgenden Materialien:
a) Aluminium und
b) Titan
ausgebildet sind.

11. Vorrichtung (1) nach einem der Ansprüche 6 bis 10, bei der ein Fördermittel umfassend mindestens eine Pumpe (7, 15) zur Förderung des Fluides aus einem Reservoir (8) in die Zuleitung (3) ausgebildet ist.

12. Vorrichtung (1) nach Anspruch 11, bei der zwischen Reservoir (8) und Zuleitung (3) mindestens ein steuerbares Ventil (16) ausgebildet ist.

13. Vorrichtung (1) nach Anspruch 12, bei der die Pumpe eine Förderpumpe (15) umfasst.

14. Vorrichtung (1) nach Anspruch 11, bei der die Pumpe eine Dosierpumpe (7) umfasst.

## Claims

1. A method for evaporating a predeterminable volume of a fluid, comprising the following steps:
a) successively adding at least one first partial volume with a first volume adding rate (17) and at least one second partial volume different from the first partial volume of the predeterminable volume with a second volume adding rate (17) into a feed line (3);
b) at least partially evaporating the partial volumes, so that a vapour film is formed between the partial volume and a wall of the feed line (3);
c) guiding the partial volumes through the feed line (3) to an evaporator surface (5), wherein the evaporator surface (5) comprises the surface of at least one evaporator channel (4); and
d) applying the partial volumes to a region of the evaporator surface (5), the position of which is varied as a function of at least one of des following parameters:
i) the mass of the corresponding partial volume and
ii) the volume adding rate (17) of the corresponding partial volume.

2. Method according to claim 1, wherein step d) is based on inertia effects.

3. Method according to one of claims 1 or 2, wherein the evaporator channel (4) is curved and changes its radius of curvature.

4. Method according to one of the preceding claims, wherein the evaporator channel (4) changes its through-flow cross section (9, 10).

5. Method according to one of the preceding claims, wherein the fluid comprises urea in aqueous solution.

6. A device (1) for evaporating a fluid according to a method of one of the preceding claims, wherein the fluid is guidable to an evaporator surface (5) through a feed line (3), wherein the evaporator surface comprises the surface of an evaporator channel (4), wherein at least one of the following parameters is variable:
a) a radius of curvature of said evaporator channel (4);
b) a through-flow cross section (9, 10) of the evaporator channel (4);
and
c) the volume adding rate (17) of the fluid.

7. Device (1) according to claim 6, wherein at least a part of said evaporator channel (4) comprises a porous coating (14).

8. Device (1) according to claim 6 or 7, wherein at least one part of said evaporator channel (4) comprises a coating catalyzing a hydrolysis of a reducing agent precursor to form a reducing agent.

9. Device (1) according to one of claims 6 to 8, wherein said feed line (3) and said evaporator channel (4) are formed of a material being corrosion-resistant upon an addition and evaporation of a urea/water solution.

10. Device (1) according to claim 9, wherein said feed line (3) and said evaporator channel (4) are formed of a basic material comprising at least one of the following materials:
a) aluminium and
b) titanium.

11. Device (1) according to one of claims 6 to 10, wherein a conveying means comprising at least one pump (7, 15) for conveying the fluid from a reservoir (8) into said feed line (3) is formed.

12. Device (1) according to claim 11, wherein at least one controllable valve (16) is realized between said reservoir (8) and said feed line (3).

13. Device (1) according to claim 12, wherein said pump comprises a conveying pump (15).

14. Device (1) according to claim 11, wherein said pump comprises a dosing pump (7).

## Revendications

1. Procédé pour évaporer un volume prédéterminable d'un fluide, comprenant les étapes suivantes:
a) ajouter successivement au moins un premier volume partiel avec un premier taux d'adjonction de volume (17) et au moins un deuxième volume partiel différent du premier volume partiel du volume prédéterminable avec un deuxième taux d'adjonction de volume (17) dans une conduite d'amenée (3);
b) évaporer au moins partiellement les volumes partiels, de sorte qu'un film de vapeur se forme entre le volume partiel et une paroi de la conduite d'amenée (3);
c) guider les volumes partiels à travers la conduite d'amenée (3) jusqu'à une surface d'évaporation (5), la surface d'évaporation (5) comprenant la surface d'au moins un canal d'évaporation (4); et
d) appliquer les volumes partiels sur une région de la surface d'évaporation (5) dont la position est variée en fonction d'au moins un des paramètres suivants:
i) la masse du volume partiel en question et
ii) le taux d'adjonction de volume (17) du volume partiel en question.

2. Procédé selon la revendication 1, dans le cas duquel l'étape d) repose sur des effets d'inertie.

3. Procédé selon l'une des revendications 1 ou 2, dans le cas duquel le canal d'évaporation (4) est courbé et modifie son rayon de courbure.

4. Procédé selon l'une des revendications précédentes, dans le cas duquel le canal d'évaporation (4) modifie sa section transversale pouvant être traversée (9, 10).

5. Procédé selon l'une des revendications précédentes, dans le cas duquel le fluide comprend de l'urée en solution aqueuse.

6. Dispositif (1) pour évaporer un fluide selon un procédé selon l'une des revendications précédentes, dans le cas duquel le fluide peut être amené par une conduite d'amenée (3) vers une surface d'évaporation (5), la surface d'évaporation comprenant la surface d'un canal d'évaporation (4), au moins un des paramètres suivants étant variable:
a) un rayon de courbure du canal d'évaporation (4);
b) une section transversale (9, 10) pouvant être traversée du canal d'évaporation (4); et
c) le taux d'adjonction de volume (17) du fluide.

7. Dispositif (1) selon la revendication 6, dans le cas duquel au moins une partie du canal d'évaporation (4) comprend un revêtement poreux (14).

8. Dispositif (1) selon la revendication 6 ou 7, dans le cas duquel au moins une partie du canal d'évaporation (4) comprend un revêtement catalysant l'hydrolyse d'un précurseur d'agent de réduction en un agent de réduction.

9. Dispositif (1) selon l'une des revendications 6 à 8 dans le cas duquel la conduite d'amenée (3) et le canal d'évaporation (4) sont formés en un matériau qui est résistant à la corrosion lorsqu'une solution d'urée-eau est ajoutée et évaporée.

10. Dispositif (1) selon la revendication (9), dans le cas duquel la conduite d'amenée (3) et le canal d'évaporation (4) sont formés d'un matériau comprenant au moins l'un des matériaux suivants:
a) de l'aluminium et
b) du titane.

11. Dispositif (1) selon l'une des revendications 6 à 10, dans le cas duquel un moyen convoyeur, comprenant au moins une pompe (7, 15) pour convoyer le fluide à partir d'un réservoir (8) jusqu'à dans la conduite d'amenée (3) est formée.

12. Dispositif (1) selon la revendication 11, dans le cas duquel au moins une valve (16) pouvant être commandée est réalisée entre le réservoir (8) et la conduite d'amenée (3).

13. Dispositif (1) selon la revendication 12, dans le cas duquel la pompe comprend une pompe d'alimentation (15).

14. Dispositif (1) selon la revendication 11, dans le cas duquel la pompe comprend une pompe de dosage (7).
